# EUROPEAN PATENT APPLICATION

(11) **EP 1 619 685 A2**
(43) Date of publication of application: **25.01.2006**
(21) Application number: 05015782.5
(22) Date of filing: 20.07.2005
(51) Int. Cl.: G11B 33/04

(54) **Disk storage case**

(30) Priority: 22.07.2004 JP 2004214264
(71) Applicant: FUJI PHOTO FILM CO., LTD, Kanagawa-ken (JP)
(72) Inventor: Sato, Daisuke Fuji Photo Film Co., Ltd, Minato-ku Tokyo (JP); Taga, Kazuaki Fuji Photo Film Co., Ltd, Minato-ku Tokyo (JP)
(74) Representative: Klunker . Schmitt-Nilson . Hirsch

(57) **Abstract**

A case for storing a recording medium disk such as a CD is provided which has a feature that an opening portion thereof is readily recognizable to users and the case can be easily opened. A case (1) has engaging elements (21, 31) respectively integrally formed with a case body (2) and a cover (3) at a corner region of the case that is located opposite an edge of the case (1) along which a hinge portion (10) is provided. The engaging elements (21, 31) cooperatively serve to lock the cover (3) to the case body (2) in its closed condition by elastic mutual engagement, and cooperatively serve to unlock the cover (3) from the case body (2) when the engaging elements (21, 31) undergo a twisting operation by user's fingers such as a thumb and a forefinger.

## Description

### BACKGROUND OF THE INVENTION

### Field of the Invention

The present invention relates to a disk storage case, and more particularly to a case for storing a recording medium disk such as a compact disc (CD), a digital versatile disc (DVD) or the like.

### Description of the Related Art

Conventionally, a commonly used flat case for storing a CD (hereinafter referred to as a standard case) comprises: a case body having an open surface that is formed across one side thereof and serves to hold a disk; and a cover that is hingedly connected to the case body in order to be opened and closed to expose and cover the open surface of the case body.

Such a standard case, however, suffers from the disadvantage that an opening portion of the case is not readily recognizable to the users and the case is difficult to open. Another disadvantage is that the standard case is not suitable for product display using a hooking member.

### SUMMARY OF THE INVENTION

In view of the foregoing circumstances, a first object of the invention is to provide a disk storage case having features that an opening portion from which the case is opened is readily recognizable to the users and that the case is easily opened. A second object of the invention is to provide a disk storage case having another feature that the case can be put on display in a hung or suspended manner in addition to the foregoing feature.

According to the present invention, there is provided a flat disk-storage case comprising: a case body that forms one of two main surfaces of the disk storage case; and a cover that forms the other of the two main surfaces of the disk storage case and includes a hinge portion provided along one edge of the case body, via which the cover is joined to the case body so as to allow swinging opening/closure of the cover;
the disk storage case further comprising a pair of engaging elements respectively provided on the case body and the cover at a region located opposite and remote from the edge of the case along which the hinge portion is provided, wherein the pair of engaging elements cooperatively serve to engage the cover to the case body and thereby lock the cover in its closed condition by elastic mutual engagement, and cooperatively serve to disengage the cover from the case body and thereby release the cover to its open condition when the engaging elements undergo a twisting operation by a user's fingers, such as a thumb and a forefinger.

According to one aspect of the invention, the engaging elements are provided so as to be arranged mutually adjacent to each other within a plane extending substantially parallel to the aforementioned main surfaces. As used herein, the term "a plane extending substantially parallel to the main surfaces" is, for example, a plane which, when the disk storage case is closed, extends parallel to and is located approximately midway between one main surface of the case formed by the case body and the other main surface of the case formed by the cover.

As used herein, the term "a twisting operation with fingers such as a thumb and a forefinger" means not only a typical "twisting operation with a thumb and a forefinger" but also other similar operations, for example, "a twisting operation with a thumb and a middle finger".

The aforementioned engaging elements are preferably provided at an approximately triangular corner region that is located opposite the edge along which the hinge portion is provided. Further, it is also preferable that an aperture for receiving a hooking member used for display and exhibit is defined at the corner region in a part more inwardly located than the engaging elements.

These engaging elements may be formed along an edge located opposite the edge along which the hinge portion is provided.

The disk storage case of the present invention is provided with a pair of engaging elements that cooperatively serve to engage the cover to the case body and thereby lock the cover in its closed condition when the engaging elements by mutual engagement, and cooperatively serve to disengage the cover from the case body and thereby release the cover to its open condition when the engaging elements undergo a twisting operation by a user's thumb and forefinger. These engaging elements are disposed at a region located opposite the edge of the case along which the hinge portion is provided. This produces the effect that the opening portion of the disk storage case is readily recognizable for users and the disk storage case can be easily opened with the fingers of one hand.

When the aforementioned engaging elements are provided at an approximately triangular corner region that is located opposite the hinge portion and usually remains as a dead space in the standard case, the engaging elements do not extend beyond the contour of the case and accordingly compactness of the disk-storage case can be ensured. Therefore, even when the disk storage cases of the invention are pre-packed in packs of some pieces, no problems impairing the transportation and loading qualities of the cases would be caused.

Further, when an aperture for receiving a hooking member used for display and exhibit is defined at the corner region in a part more inwardly located than the engaging elements, display and exhibit of the tape storage cases using the hooking members becomes possible, which would contribute to increase in sales floor area to, for example, sales shops in the countries where sales goods are often put on display in a hung or suspended manner; convenience stores; and sales space near checkout stations of supermarkets.

### BRIEF DESCRIPTION OF THE DRAWINGS

FIG. 1 is a plan view of a disk storage case according to a first embodiment of the invention shown closed;
FIG. 2 is a plan view of the disk storage case in FIG. 1 shown opened;
FIG. 3A is an enlarged sectional view taken along line 3-3 in FIG. 1, showing engaging elements of the disk storage case which are elastically engaged with each other, and FIG. 3B is an enlarged sectional view, showing the engaging elements which are disengaged from each other.
FIG. 4 is a perspective view of the disk storage case in FIG. 1 with a cover thereof being semi-opened;
FIG. 5 is a front view showing the state that the disk storage cases are put on display in a row with the disk storage cases of FIG. 1 being respectively hung by means of hooking members;
FIG. 6A to FIG. 6D are schematic perspective views showing pre-packed forms of the disk storage cases shown in FIG. 1 which are packaged in packs of some pieces;
FIG. 7 is a plan view showing a disk storage case according to a second embodiment of the invention;
FIG. 8 is an enlarged perspective view showing an opening portion of the disk storage case shown in FIG. 7;
FIG. 9 is a perspective view of the disk storage case in FIG. 7 with the cover being semi-opened;
FIG. 10 is an enlarged cross-sectional view taken along line 10-10 in FIG. 7;
FIG. 11 is a plan view showing a disk storage case according to a third embodiment of the invention with the disk storage case being closed;
FIG. 12 is a perspective view of the disk storage case in FIG. 11 with the cover being semi-opened;
FIGS. 13A and 13B are enlarged perspective view respectively showing the opening portion of the disk storage case shown closed and semi-opened;
FIG. 14 is an enlarged side view showing the opening portion of the disk storage case in FIG. 11 shown semi-opened;
FIG. 15 is a cross-sectional view taken along line 15-15 in FIG. 14; and
FIG. 16 is a cross-sectional view taken along line 16-16 in FIG. 14.

### DESCRIPTION OF THE PREFERRED EMBODIMENTS

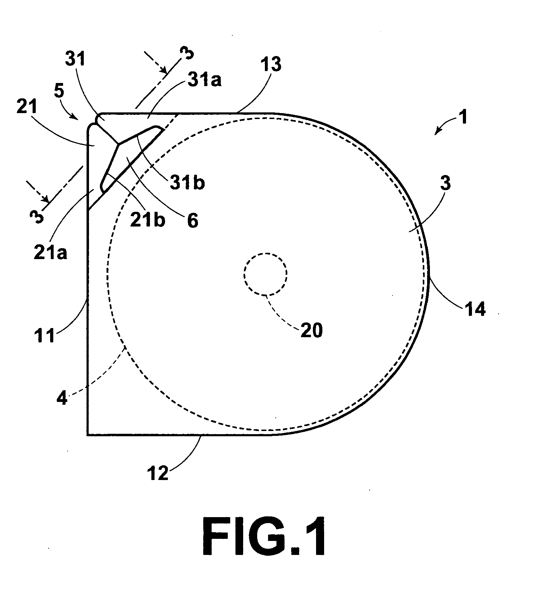

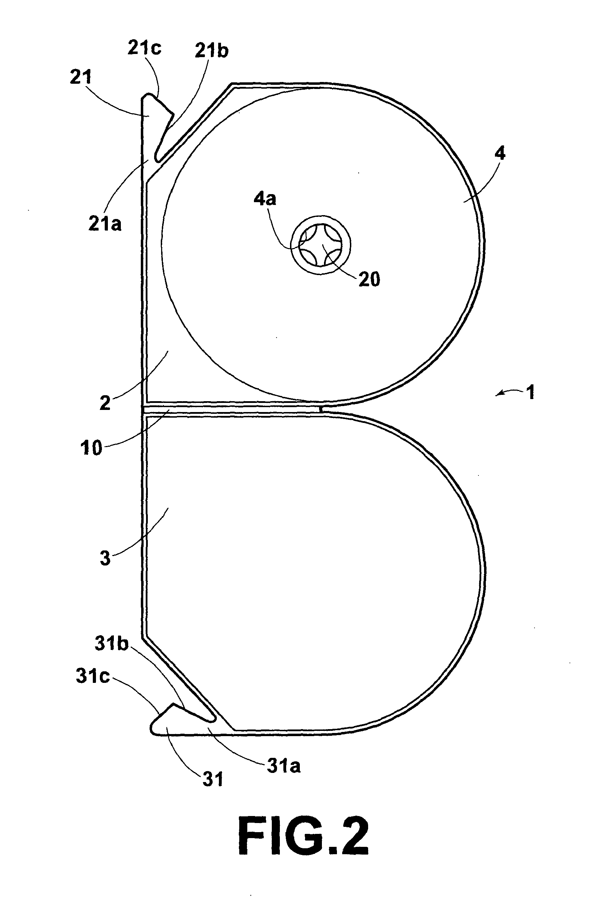

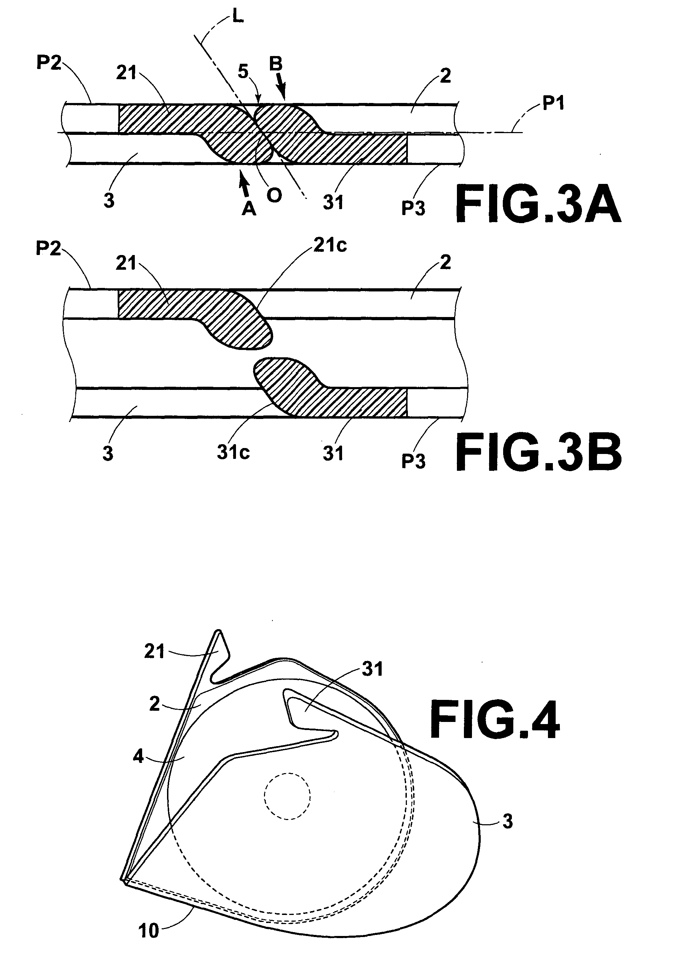

A first embodiment of the disk storage case of the invention is shown in FIGS. 1 to 4. Specifically, FIG. 1 is a plan view of the disk storage case shown closed; FIG. 2 is a plan view of the disk storage case shown opened; FIG. 3A is an enlarged sectional view taken along line 3-3 in FIG. 1 with a pair of engaging elements of the disk storage case being elastically engaged with each other; FIG. 3B is an enlarged sectional view with the pair of engaging elements being disengaged (i.e. released from the elastically engaged state); and FIG. 4 is a perspective view with the opening portion being semi-opened.

As can be seen from FIG. 1, the disk storage case 1 in its closed condition has a D-shaped plan contour defined by a linearly extending first side 11, a second and third sides 12 and 13 each of which is shorter than the first side 11 and linearly extends away from each end of the first side at a right angle, and a fourth side 14 which extends between the end of the second side remote from the first side 12 and the end of the third side 13 remote from the first side 11. As can be seen from FIG. 2, a case body which forms one of two main surfaces P2 (see FIG. 3) of the disk storage case 1 is joined with a cover 3 which forms the other of the two main surfaces P3 (see FIG. 3), such that the cover can pivot between its closed position and its open position about a hinge portion 10 disposed along the second side 12.

A circular disk-holding projection 20 is centrally disposed within the case body 2. The circular disk-holding projection 20 is engaged in a center hole 4a formed in a recording medium disk 4 such as a CD, a DVD or the like, so that the recording medium disk 4 can be removably held.

An opening portion 5 from which the cover 3 is opened and closed with respect to the case body 2 is located at a corner region of the disk storage case 1 located opposite the second side 12, i.e. a corner formed by the first side 11 and the third side 13 so that it has a substantially right angled triangular shape.

As is apparent from FIG. 2, this opening portion 5 is defined by: a first engaging element 21 that is integrally formed with the case body 2 so as to extend along the first side 11 to the corner at the opening portion; and a second engaging element 31 that is integrally formed with the cover 3 so as to extend along the third side 13 to the corner region at the opening portion.

Each engaging element 21, 31 has a narrowly formed root portion 21a and 31a, respectively, whereby elasticity is imparted thereto. As is apparent from FIG. 1, an aperture 6 is provided in a part more inwardly located than the engaging elements 21 and 31. The aperture 6 is partially defined by inner peripheries 21b and 31b of the engaging elements 21 and 31.

With reference to FIG. 3A showing an enlarged sectional view taken along line 3-3 in F'IG. 1, assume that a plane P1 that is located approximately midway between the one main surface P2 of the disk storage case 1 formed by the case body 2 and the other main surface P3 of the disk storage case 1 formed by the case body 2 and extends substantially parallel to these main surfaces P2 and P3. The distal ends of the first and second engaging elements 21 and 31 are arranged mutually adjacent to each other within the plane P1 such that the distal end of the first engaging element 21 of the case body 2 is bulged out toward the main surface P3 (so as not to extend beyond the level of the main surface P3 when the disk storage case is closed) while the distal end of the second engaging element 31 of the cover 2 is bulged out toward the main surface P2 (so as not to extend beyond the main surface P2 when the disk storage case is closed).

The first and second engaging elements 21 and 31 are respectively provided with first and second engaging surfaces 21c and 31c which are elastically engaged with each other on or near a point O on the plane P1. As shown, a tangent line L to the first and second engaging surfaces passes through or near the point O on the plane P1 in a manner such that the tangent line L is inclined in the direction toward the first and second engaging elements 21 and 31, whereby the cover 3 is engaged with the case body 2 and held in a closed condition.

Such an engaging mechanism can bee seen, for example, at a top closure of a purse or a handbag. When a user puts the tip of his or her thumb on the bottom side of the distal end of the first engaging element 21 as indicated by arrow A while putting the tip of his or her forefinger (or middle finger) on the top side of the distal end of the second engaging element 31 as indicated by arrow B and twists the finger tips in the clockwise direction about point O, the first and second engaging surfaces 21c and 31c in contact with each other mutually slide and finally the first and second engaging elements 21 and 31 are disengaged as shown in FIG. 3B. Thus, the cover 3 can be opened as shown in FIG. 4. To close the cover 3, the user needs to apply pressure such a direction that the disengaged first and second engaging elements 21 and 31 as shown in FIG. 3B or the main surfaces P2 and P3 near the engaging elements 21 and 31 are brought closer to each other, which causes the first and second engaging elements 21 and 31 to be elastically flexed and finally engaged with each other as shown in FIG. 3A.

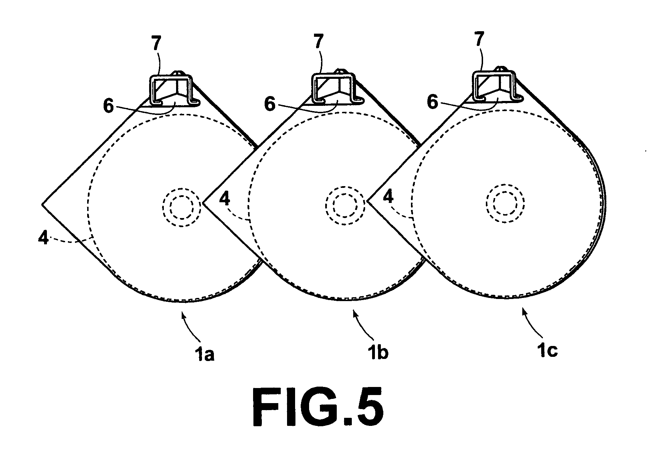

The aperture 6 defined in a part more inwardly located than the first and second engaging elements 21 and 31 serves as an aperture for receiving a hooking member that is used when the disk storage case 1 holding therein a disk 4 is put on display in a hung or suspended manner. FIG. 5 shows a state where three disk-storage cases 1a, 1b, 1c each holding therein a disk 4 are arranged in a row for display and exhibit with the disk storage cases being respectively hung by hooking members 7.

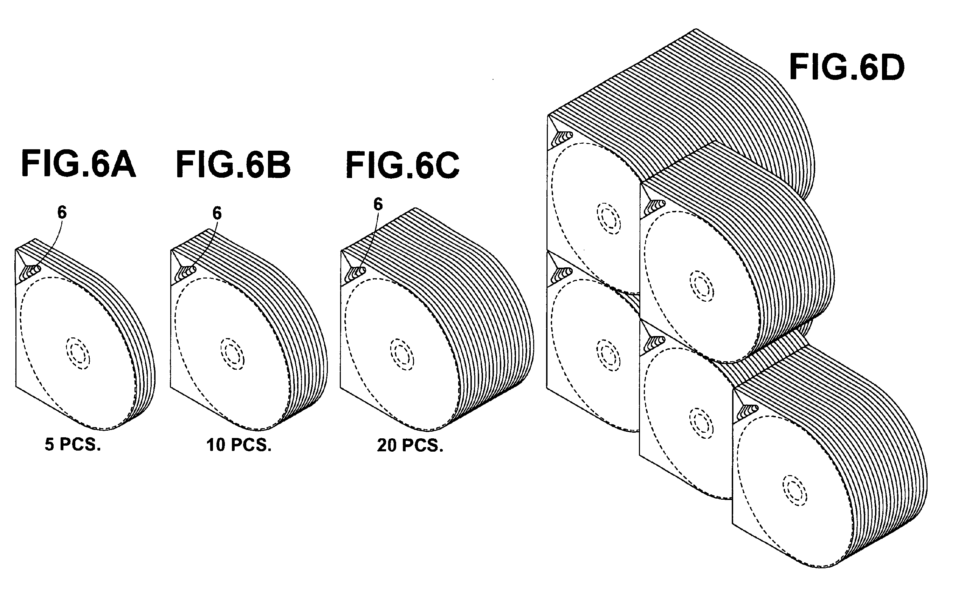

FIG. 6A to FIG. 6D show the disk storage cases 1 of the first embodiment with the cases being packaged in a pack of 5 pieces, 10 pieces, 20 pieces, and so on.

As can be seen from the foregoing description, the disk storage case 1 of the first embodiment is provided with a pair of engaging elements 21 and 31 at a corner region of the case 1 located opposite the edge along which the hinge portion 10 is provided. An aperture is defined within the corner region. The engaging elements 21 and 31 cooperatively serve to engage the cover 3 to the case body 2 and thereby lock the cover 3 in its closed condition by elastic mutual engagement, and cooperatively serve to disengage the cover 3 from the case body 2 and thereby release the cover 3 to its open condition when the engaging elements 21 and 31 undergo a twisting operation by user's fingers such as a thumb and a forefinger. This produces an effect of making the opening portion 5 readily recognizable to users and allowing the users to easily open the disk storage case.

Further, since the aperture for receiving a hooking member 7 used for display and exhibit is defined in a part more inwardly located than the first and second engaging elements 21 and 31, display and exhibit using the hooking member 7 becomes possible.

In addition, since the engaging elements 21 and 31 are formed at an approximately triangular corner region that remains as a dead space, the compactness of the disk storage case 1 is not precluded.

Further, since the engaging elements 21 and 31 do not extend beyond the levels of the main surfaces P3 and P2 opposite thereto as shown in FIG. 3A, disk storage cases pre-packed as shown in FIGS. 6A to 6D would not cause any problem regarding transportation and loading.

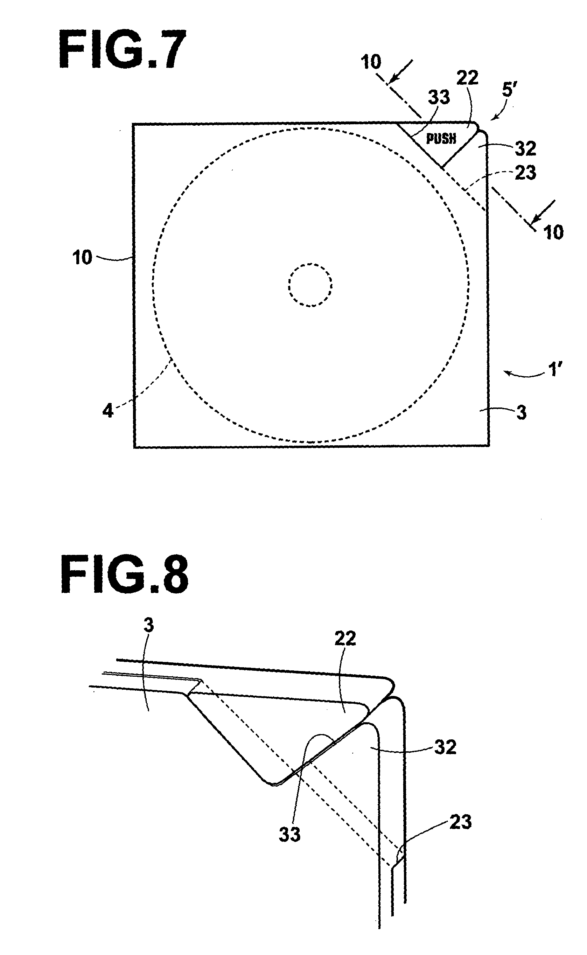

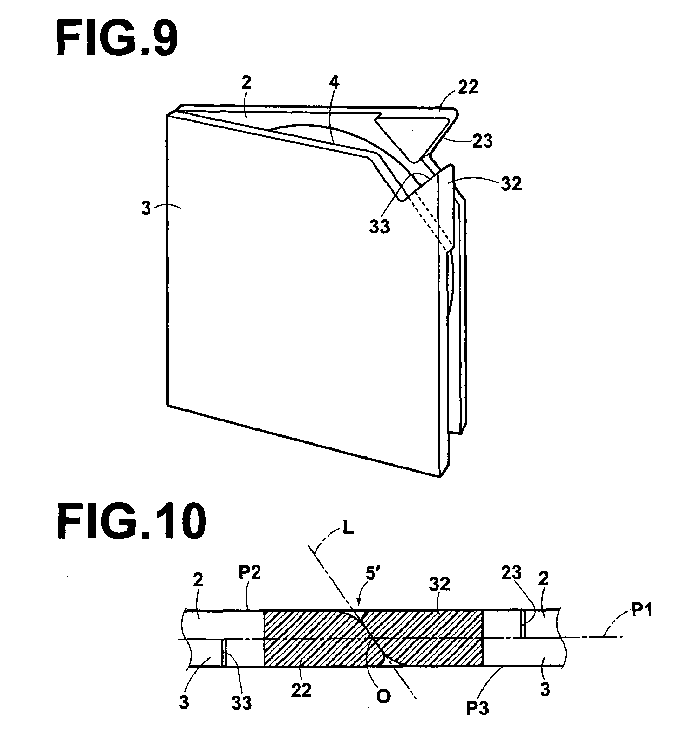

FIGS. 7 to 10 show a disk storage case according to a second embodiment of the invention. Specifically, FIG. 7 is a plan view of the disk storage case shown closed; FIG. 8 is an enlarged perspective view showing an opening portion thereof; FIG. 9 is a perspective view of the disk storage case shown semi-opened; and FIG. 10 is an enlarged cross sectional view taken along line 10-10 in FIG. 7.

The disk storage case 1' comprises a case body 2 and a cover 3, each of which has an approximately square planar shape. The case body 2 and the cover 3 are joined via a hinge portion 10 such that the cover 3 can pivot between its closed position and its open position. As in the first embodiment described above, an opening portion 5' is provided at a corner region of the disk storage case 1' which is located opposite the hinge portion 10. The case body 2 and the cover 3 which respectively form main surfaces P2 and P3 of the disk storage case 1' are respectively provided with a first engaging element 22 and a second engaging element 32, one on each side of the opening portion 5'. When the disk storage case 1' is closed, the first and second engaging elements 22 and 32 are respectively positioned to be flush with the main surfaces P3 and P2 opposite thereto. V-shaped notches 23, 33 each of which is adapted to receive the corresponding engaging element 32, 22 are respectively formed in the case body 2 and the cover 3.

With reference to FIG. 10 which corresponds to FIG. 3A, when assuming a plane P1 that is located approximately midway between these main surfaces P2 and P3 and extends substantially parallel to these main surfaces P2 and P3, the first and second engaging elements 22 and 32 are arranged mutually adjacent to each other within the plane P1. The engaging elements 22 and 32 are respectively provided with engaging surfaces which are elastically engaged with each other on or near a point O on the plane P1. As is shown, a tangent line L to the engaging surfaces passes through or near the point O on the plane P1 in a manner such that the tangent line L is inclined in the direction toward the first and second engaging elements 22 and 32, whereby the cover 3 is engaged with the case body 2 and held in a closed condition.

In this case too, by imparting a twisting operation to the engaging elements near the opening portion 5' with the tips of user's fingers (for example, a thumb and a forefinger) in the clockwise direction about point O, the engaging elements 22 and 32 are disengaged or released from the elastic engagement. Thus, the cover 3 can be easily opened as shown in FIG. 9.

As is also evident from FIG. 7, when a visual indication, for example, "push", for indicating where the opening portion 5' is positioned is indicated on the engaging element 22 of the case body 2 facing the cover 3, the user can find the opening portion 5' more easily.

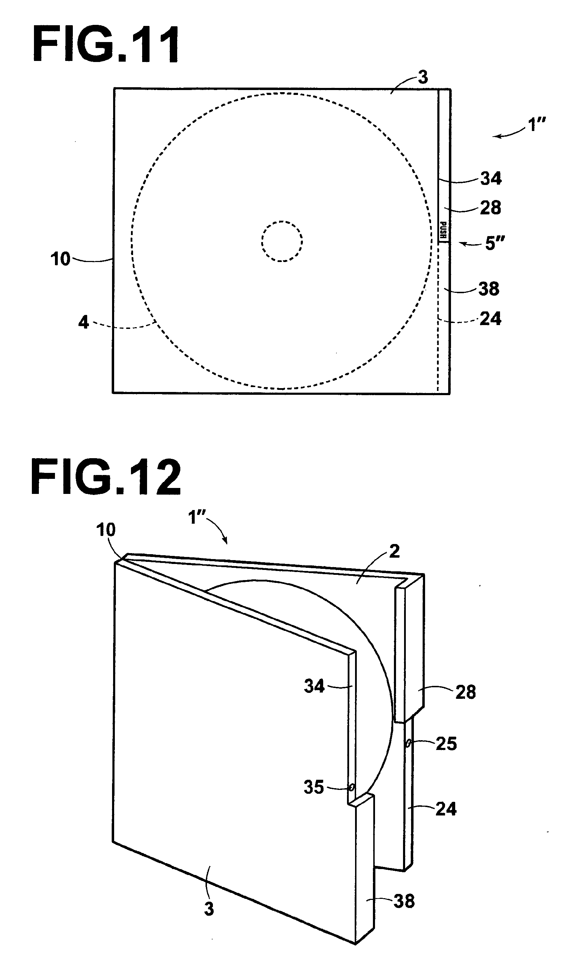

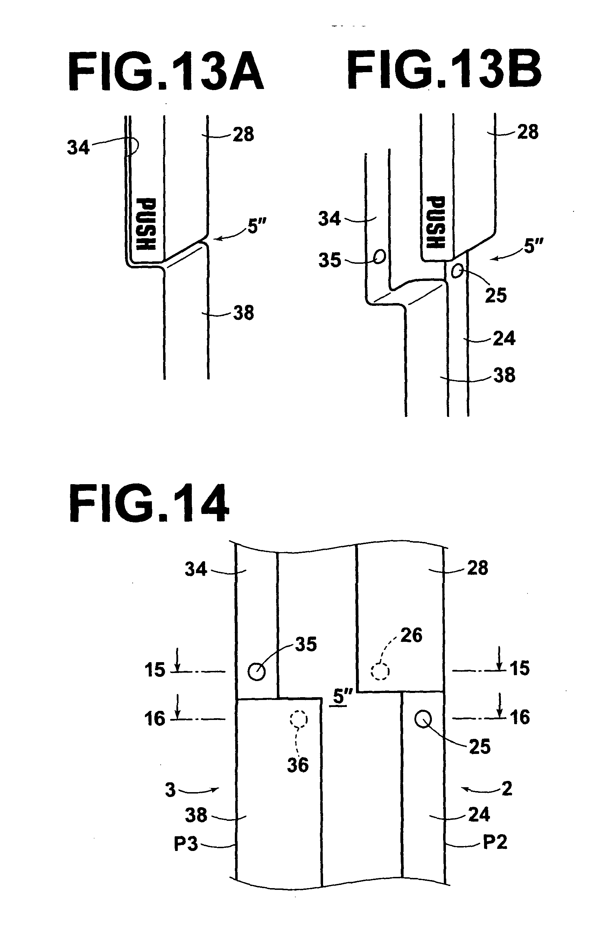

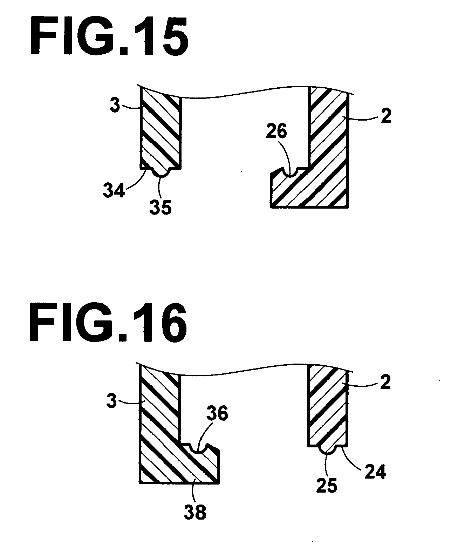

FIGS. 11 to 16 show a disk storage case according to a third embodiment of the invention. Specifically, FIG. 11 is a plan of the disk storage case shown closed; FIG. 12 is a perspective view of the disk storage case shown semi-opened; FIG. 13A is an enlarged perspective view of an opening portion of the disk storage case shown closed; FIG. 13B is an enlarged perspective view of the opening portion shown semi-opened; FIG. 14 is a perspective view with the opening portion being semi-opened, as viewed from the right side of FIG. 11; FIG. 15 is a partial sectional view taken along line 15-15 in FIG. 14; and FIG. 16 is a partial sectional view taken along 16-16 in FIG. 14.

A disk storage case 1" according to the third embodiment has an opening portion 5" at the substantial middle of a side opposite to another side along which a hinge portion 10 is provided. The disk storage case 1" comprises a case body 2 and a cover 3 which respectively form main surfaces P2 and P3 of the disk storage case 1". The case body 2 and the cover 3 respectively include a first flange 28 and a second flange 38 along the opposite side mentioned above. These flanges are disposed one on each side of the opening portion 5". When the disk storage case 1" is closed, these flanges 28 and 38 are respectively positioned to be flush with the main surfaces opposite thereto. Accordingly, elongate cutouts 24 and 34 each of which receives the corresponding flanges 38 and 28 are respectively formed in the case body 2 and the cover 3 along the opposite side.

As is especially apparent from FIG. 13B and FIGS. 14 to 16, engaging protrusions 25 and 35 are respectively provided on the end faces of the cutouts 24 and 34 near the opening portion 5". Accordingly, on the inner surfaces of the flanges 28, 38, protrusion receiving recesses 26 and 36 for respectively receiving the engaging protrusions 35 and 25 are formed correspondingly.

More specifically, the disk storage case 1" is provided with a set of paired elastically engaging elements which are constituted by an engaging protrusion 25 on the case body 2 and a protrusion receiving recess 36 on the cover 3; and a protrusion receiving recess 26 on the case body 2 and a engaging protrusion 35 on the cover 3. Also in the third embodiment, to open the closed disk storage case 1", the user needs to put the tips of fingers (for example, a thumb and a forefinger) on the flanges 28 and 38 near the opening portion 5" and twist the fingers in the clockwise direction. Whereby the engaging elements are disengaged from each other, and thus the cover 3 can be easily opened as shown in FIG. 12.

Also in the third embodiment, when a visual indication, for example, "push", for indicating where the opening portion 5" is positioned is indicated on the flange 28 of the case body 2 facing the cover 3, it enables the user to know where the user should place his or her fingers.

When the disk storage case of the invention is sold with a disk medium, for example, an optical disk (such as a CD-RCM or a DVD-RCM) or an optical recording medium (such as a CD-R, a CD-RW, a DVD-R, or DVD-RW), being held therein, it is preferable to affix a sealing label on the opening portion of the case in order to prevent the disk therein from being easily stolen. Such a sealing label may be, for example, a sealing label described in Japanese Unexamined Patent Publication No. 2002-347875.

## Claims

1. A flat disk-storage case (1, 1', 1") comprising: a case body (2) that forms one of two main surfaces of the disk storage case (1, 1', 1"); and a cover (3) that forms the other of the two main surfaces of the disk storage case (1, 1', 1") and includes a hinge portion (10) provided along one edge of the case body (2), via which the cover (3) is joined to the case body (2) so as to allow swing open/closure of the cover (3), wherein the main surfaces are positioned substantially parallel to each other when the disk storage case (1, 1', 1") is in a closed condition,
**characterized by** further comprising a pair of engaging elements (21, 31; 22, 32; 25, 36; 26, 35) respectively provided on the case body (2) and the cover (3) at a region located opposite and remote from the edge of the case (1, 1', 1") along which the hinge portion (10) is provided, wherein the engaging elements (21, 31; 22, 32; 25, 36; 26, 35) cooperatively serve to engage the cover (3) to the case body (2) and thereby lock the cover (3) in its closed condition by elastic mutual engagement, and cooperatively serve to disengage the cover (3) from the case body (2) and thereby release the cover (3) to its open condition when the engaging elements (21, 31; 22, 32; 25, 36; 26, 35) undergo a twisting operation by user's fingers such as a thumb and a forefinger.

2. The disk storage case as set forth in claim 1, **characterized in that** the pair of the engaging elements (21, 31; 22, 32) are provided so as to be arranged mutually adjacent to each other within a plane extending substantially parallel to the main surfaces when the disk storage case (1, 1') is in its closed condition.

3. The disk storage case as set forth in claim 2, **characterized in that** the engaging elements (21, 31; 22, 32) are formed at an approximately triangular corner region that is located opposite the edge along which the hinge portion (10) is provided.

4. The disk storage case as set forth in claim 3, **characterized in that** an aperture (6) for receiving a hooking member (7) used for display and exhibit is defined at the corner region in a part more inwardly located than the engaging elements (21, 31).

5. The disk storage case as set forth in claim 1, **characterized in that** the engaging elements (25, 36; 26, 35) are formed along an edge of the disk storage case that is located opposite the edge along which the hinge portion (10) is provided.
